# EUROPÄISCHE PATENTSCHRIFT

(11) **EP 1 247 431 B1**
(45) Veröffentlichungstag und Bekanntmachung des Hinweises auf die Patenterteilung: **05.07.2006**
(21) Anmeldenummer: 01907361.8
(22) Anmeldetag: 12.01.2001
(51) Int. Cl.: H05B 37/02

(54) **VORRICHTUNG UND VERFAHREN ZUR STEUERUNG VON BETRIEBSMITTELN FÜR MINDESTENS EIN ELEKTRISCHES LEUCHTMITTEL**
DEVICE AND A METHOD FOR CONTROLLING OPERATING MEANS FOR AT LEAST ONE ELECTRIC ILLUMINATING MEANS
DISPOSITIF ET PROCEDE POUR COMMANDER DES MOYENS D'EXPLOITATION POUR AU MOINS UN MOYEN D'ECLAIRAGE ELECTRIQUE

(30) Priorität: 14.01.2000 DE 10001241
(43) Veröffentlichungstag der Anmeldung: 09.10.2002
(73) Patentinhaber: Patent-Treuhand-Gesellschaft für elektrische Glühlampen mbH, 81543 München (DE)
(72) Erfinder: PILZ, Axel, 74632 Neuenstein (DE); HUBER, Andreas, 83301 Traunreut (DE)
(74) Vertreter: Raiser, Franz
(86) Internationale Anmeldenummer: PCT/DE2001/000148
(87) Internationale Veröffentlichungsnummer: WO 2001/052607

(56) Entgegenhaltungen:
- EP-A- 0 714 224
- EP-A- 0 821 547
- DE-U- 29 811 633
- US-A- 4 968 917
- US-A- 5 339 009

## Beschreibung

Die Erfindung betrifft eine Vorrichtung zur Steuerung von Betriebsmittel für mindestens ein elektrisches Leuchtmittel gemäß dem Oberbegriff des Patentanspruchs 1 und ein Verfahren zur Steuerung von Betriebsmitteln für mindestens ein elektrisches Leuchtmittel gemäß dem Patentanspruch 5. Mit dem Begriff elektrisches Leuchtmittel werden sowohl elektrische Lampen wie zum Beispiel Glühlampen oder Entladungslampen als auch lichtemittierende Dioden bezeichnet.

### I. Stand der Technik

Die Offenlegungsschrift EP 0 639 938 Al beschreibt eine Steuer-Vorrichtung für gruppenweise zusammengefaßte Verbraucher. Bei diesen Verbrauchern handelt es sich insbesondere um Betriebsgeräte für elektrische Lampen, die eine Vorrichtung gemäß dem Oberbegriff des Patentanspruchs 1 und Betriebsmittel für mindestens eine elektrische Lampe aufweisen. Diese Betriebsgeräte besitzen einen Steuersignaleingang, über den sie mittels der Steuer-Vorrichtung mit Steuersignalen beaufschlagt werden, um unterschiedliche Beleuchtungsszenarien zu realisieren. Zur Steuerung der Betriebsgeräte sind digitale Steuersignale erforderlich.

Die Offenlegungsschrift EP 0 821 547 A2 offenbart ein Verfahren und eine Vorrichtung zur Anpassung der Helligkeitssteuerung einer Anzeigevorrichtung oder einer Lampe eines Kraftfahrzeugs, unabhängig davon, welche Art der Helligkeitsteuerung in dem Kraftfahrzeug verwendet wird.

### II. Darstellung der Erfindung

Es ist die Aufgabe der Erfindung, eine Vorrichtung zur Steuerung von Betriebsmitteln für mindestens ein elektrisches Leuchtmittel bereitzustellen, die über denselben Steuersignaleingang wahlweise mit digitalen oder analogen Steuersignalen ansteuerbar ist, und ein Verfahren zur Steuerung der Betriebsmittel für mindestens ein elektrisches Leuchtmittel anzugeben, das am gleichen Steuersignaleingang eine Steuerung der Betriebsmittel wahlweise mit digitalen oder analogen Steuersignalen ermöglicht.

Diese Aufgabe wird für eine gattungsgemäße Vorrichtung erfindungsgemäß durch die Merkmale des Patentanspruchs 1 und für das Verfahren erfindungsgemäß durch die Merkmale des Patentanspruchs 5 gelöst. Besonders vorteilhafte Merkmale der Erfindung sind in den Unteransprüchen beschrieben.

Die erfindungsgemäße Vorrichtung besitzt Auswertungsmittel, die geeignet sind, selbsttätig sowohl analoge als auch digitale Steuersignale an dem Steuersignaleingang der Vorrichtung zu detektieren und zur Steuerung der Betriebsmittel für die Leuchtmittel auszuwerten. Die erfindungsgemäße Vorrichtung kann daher sowohl in Beleuchtungsanlagen eingesetzt werden, die mit zentralen Steuereinrichtungen zur Erzeugung analoger Steuersignale ausgestattet sind, als auch in Beleuchtungsanlagen, die mit zentralen Steuereinrichtungen zur Erzeugung digitaler Steuersignale versehen sind. Außerdem muß sich der Anwender keine Gedanken über den korrekten Anschluß der erfindungsgemäßen Vorrichtung an die Steuereinrichtung machen, da derselbe Steuersignaleingang der erfindungsgemäßen Vorrichtung für die analoge und auch für die digitale Steuerung der Betriebsmittel durch die Steuereinrichtung verwendet wird. Ferner kann sich der Anwender auch nachträglich, das heißt, nach dem Einbau der erfindungsgemäßen Vorrichtung und der Betriebsmittel in die Beleuchtungsanlage, wahlweise für den Einsatz einer analogen oder digitalen Steuereinrichtung in der Beleuchtungsanlage entscheiden. Die Auswertungsmittel enthalten vorteilhafterweise einen programmgesteuerten Mikrocontroller oder eine Logikschaltung. Die erfindungsgemäße Vorrichtung ist vorteilhafterweise Bestandteil eines Betriebsgerätes für elektrische Leuchtmittel, das Betriebsmitteln für mindestens ein Leuchtmittel aufweist. Es ist aber auch möglich, die erfindungsgemäße Vorrichtung außerhalb eines Betriebsgerätes für elektrische Leuchtmittel anzuordnen und Signalübertragungsmittel, beispielsweise Kabel, zwischen der erfindungsgemäßen Vorrichtung und den innerhalb des Betriebsgerätes angeordneten Betriebsmitteln für die mindestens ein elektrisches Leuchtmittel vorzusehen.

Das erfindungsgemäße Verfahren zur Steuerung von Betriebsmitteln für mindestens ein elektrisches Leuchtmittel durch von einer externen Steuervorrichtung generierte Steuersignale mit Hilfe einer Vorrichtung, die einen Steuersignaleingang zum Empfang der Steuersignale sowie Auswertungsmittel zur Auswertung der Steuersignale und zur Steuerung der Betriebsmittel aufweist, umfaßt folgende Verfahrensschritte:
- Beaufschlagen des Steuersignaleinganges mit einem Steuersignal und Übertragen des Steuersignals an die Auswertungsmittel,
- Selbsttätiges Prüfen des Steuersignals durch die Auswertungsmittel, ob das Steuersignal ein gültiges digitales Steuersignal oder ein gültiges analoges Steuersignal oder ein ungültiges Signal bildet, und
- falls ein gültiges digitales oder analoges Steuersignal vorliegt, Auswertung des Steuersignals und entsprechende Steuerung der Betriebsmittel durch die Auswertungsmittel, wobei zur Unterscheidung zwischen digitalen und analogen Steuersignalen die Anzahl der innerhalb eines vorgegebenen Zeitintervalls detektierten Signalflanken des Steuersignals ermittelt und mit vorgegebenen Sollwerten für die digitale bzw. analoge Ansteuerung verglichen wird.

Das erfindungsgemäße Verfahren ermöglicht eine wahlweise Steuerung der Betriebsmittel der Leuchtmittel einer Beleuchtungsanlage mittels analoger oder digitaler Steuersignale, die von einer zentralen Steuereinrichtung der Beleuchtungsanlage zur Steuerung der Beleuchtungsfunktionen erzeugt werden. Außerdem können die Steuersignale, unabhängig davon ob es sich um analoge oder digitale Steuersignale handelt, demselben Steuersignaleingang jeder erfindungsgemäßen Vorrichtung oder jedes Betriebsgerätes, das die erfindungsgemäße Vorrichtung enthält, zugeführt werden. Die Vorrichtungen bzw. Betriebsgeräte benötigen daher keine separaten Steuersignaleingänge für analoge und digitale Signale. Für den Fall einer analogen Ansteuerung der Vorrichtungen bzw. Betriebsgeräte wird als analoges Steuersignal vorteilhafterweise eine periodische Wechselspannung verwendet, deren Scheitelwert einen vorgebbaren, den minimal zulässigen High-Pegel für digitale Steuersignale repräsentierenden Schwellwert übersteigt, und die mindestens einmal pro Periode einen Wert unterhalb eines vorgebbaren zweiten Schwellwertes, der den maximal zulässigen Low-Pegel für digitale Steuersignale repräsentiert, annimmt. Bei derartigen analogen Steuersignalen kann sogar ein einzelner Taster zur Steuerung der erfindungsgemäßen Vorrichtungen bzw. Betriebsgeräte der Beleuchtungsanlage verwendet werden. Das erfindungsgemäße Verfahren erlaubt ferner an demselben Steuersignaleingang eine zusätzliche Steuerung der Vorrichtungen bzw. Betriebsgeräte durch eine Konstantlichtregelungseinrichtung.

### III. Beschreibung des bevorzugten Ausführungsbeispiels

Nachstehend wird die Erfindung anhand eines bevorzugten Ausführungsbeispiels näher erläutert. Es zeigen:
- Figur 1: Eine schematische Darstellung einer Beleuchtungsanlage mit erfindungsgemäßen Betriebsgeräten und einer zentralen, mit digitalen Steuersignalen arbeitenden Steuervorrichtung
- Figur 2: Eine schematische Darstellung einer Beleuchtungsanlage mit erfindungsgemäßen Betriebsgeräten und einer aus einem einzelnen Taster und einer Konstantlichtregelungseinrichtung bestehenden, zentralen, mit analogen Steuersignalen arbeitenden Steuervorrichtung
- Figur 3: Ein Flußdiagramm, das das erfindungsgemäße Verfahren, insbesondere den Wechsel zwischen den beiden Betriebsarten veranschaulicht
- Figur 4: Ein Flußdiagramm zur Veranschaulichung der analogen Steuerung der Betriebsgeräte mittels eines einzelnen Tasters
- Figur 5: Eine schematische Darstellung einer Beleuchtungsanlage mit erfindungsgemäßen Betriebsgeräten und einer aus einem einzelnen Taster und einem Bewegungsmelder bestehenden, zentralen, mit analogen Steuersignalen arbeitenden Steuervorrichtung

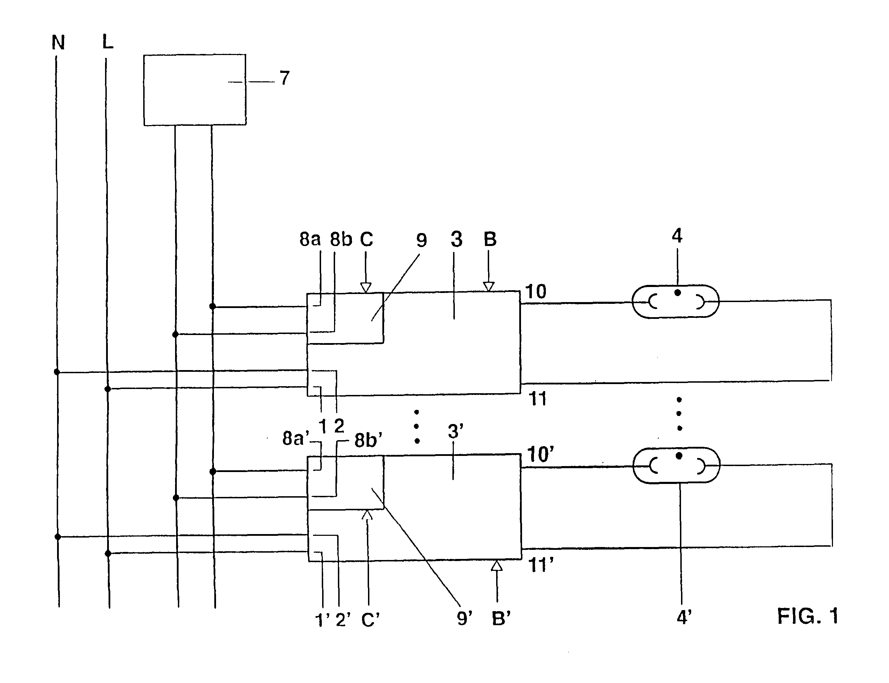

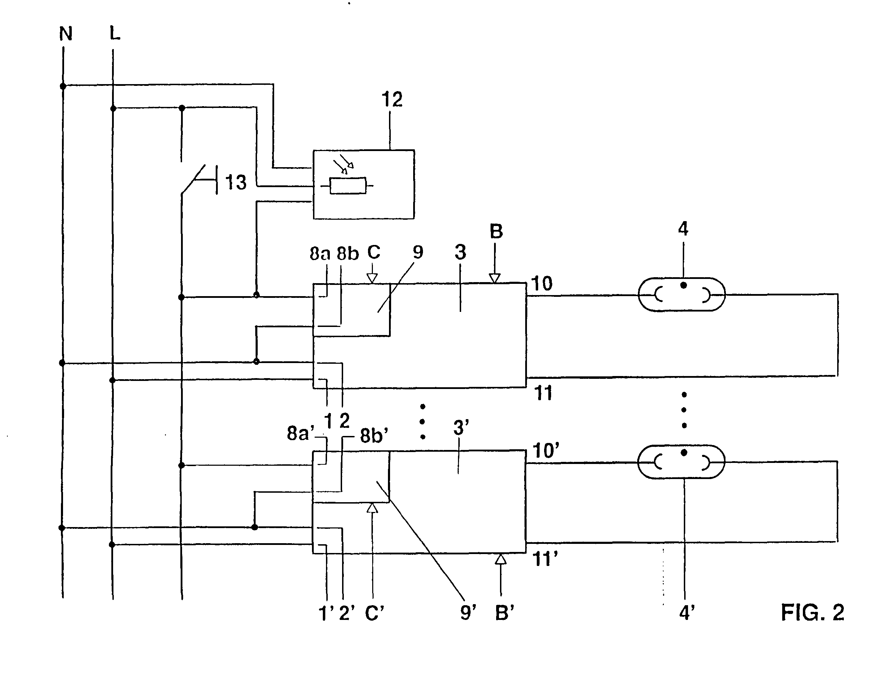

In den Figuren 1 und 2 ist jeweils eine Beleuchtungsanlage mit einer Vielzahl von erfindungsgemäßen Betriebsgeräten B, B' für elektrische Lampen 4, 4' schematisch abgebildet. Das erfindungsgemäße Betriebsgerät B besitzt elektrische Anschlüsse 1, 2 zur Spannungsversorgung des Betriebsgerätes, Betriebsmittel 3 für mindestens eine elektrische Lampe 4, elektrische Anschlüsse 10, 11 für die mindestens eine Lampe 4, einen Steuersignaleingang mit zwei Klemmen 8a, 8b, der zur Steuerung der Betriebsmittel 3 dient, und Auswertungsmittel 9, die die Steuersignale an dem Steuersignaleingang 8 detektieren und auswerten. Die Betriebsmittel 3 des Betriebsgerätes bestehen im wesentlichen aus einem fremdgesteuerten Halbbrückenwechselrichter, dessen Lastkreis als Serienresonanzkreis ausgebildet und mit den Anschlüssen 10, 11 für mindestens eine elektrische Lampe 4 versehen ist. Die Auswertungsmittel 9 sind dem fremdgesteuerten Halbbrückenwechselrichter vorgeschaltet. Sie bestehen im wesentlichen aus einem programmierbaren Mikrocontroller, der die am Steuersignaleingang 8a, 8b anliegenden Steuersignale programmgesteuert auswertet und in entsprechende Signale zur Fremdsteuerung des Halbbrückenwechselrichters umwandelt. Die Fremdsteuerung des Halbbrückenwechselrichters wird beispielsweise mit Hilfe eines speziell dafür konstruierten Integrierten Schaltkreises durchgeführt, der beispielsweise pulsweitenmodulierte Signale zur Steuerung der Schalttransistoren des Halbbrückenwechselrichters generiert. Der programmierbare Mikrocontroller der Auswertungsmittel 9 übernimmt in diesem Fall die Ansteuerung des Integrierten Schaltkreises des Halbbrückenwechselrichters. Die Auswertungsmittel 9 sind beispielsweise über einen Optokoppler und eine Überspannungsschutzschaltung an die Klemmen 8a, 8b des Steuersignaleinganges gekoppelt.

Die Auswertungsmittel 9 und der Steuersignaleingang mit seinen Klemmen 8a, 8b bilden eine Vorrichtung C, die nicht unbedingt Bestandteil des Betriebsgerätes B sein muß, sondern auch als separate Baueinheit ausgeführt sein kann und insbesondere auch außerhalb des Gehäuses des Betriebsgerätes B angeordnet sein kann. In diesem Fall ist jede Vorrichtung C an das ihr zugeordnete Betriebsgerät B durch geeignete Signalübertragungsmittel, beispielsweise durch Verbindungskabel, gekoppelt.

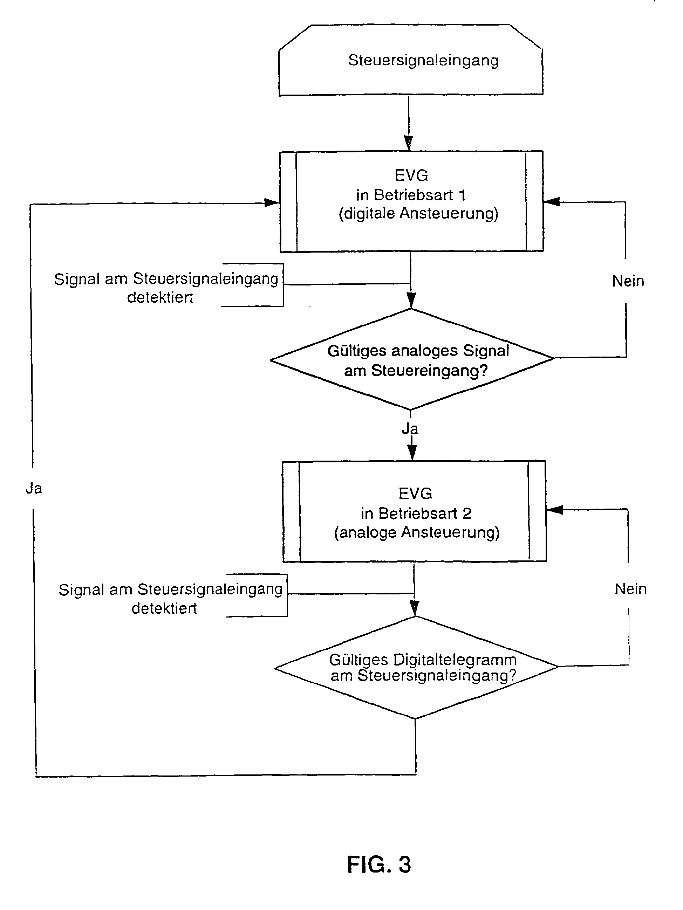

Entsprechend des erfindungsgemäßen Verfahrens können die Betriebsgeräte B, B' bzw. die Vorrichtungen C, C' an ihrem Steuersignaleingang 8a, 8b, 8a', 8b' wahlweise mit digitalen oder analogen Steuersignalen angesteuert werden. Die digitale Ansteuerung der Betriebsgeräte B, B' bzw. der Vorrichtungen C, C' ist schematisch in Figur 1 dargestellt. Zur digitalen Ansteuerung sind die Klemmen 8a, 8b, 8a', 8b' der Steuersignaleingänge der Betriebsgeräte B, B' bzw. der Vorrichtungen C, C' mit einer zentralen, digitalen externen Steuervorrichtung 7 verbunden, die mit Bedienungselementen zur Steuerung der Beleuchtungsfunktionen versehen ist. Zur Energieversorgung sind die elektrischen Anschlüsse 1, 2, 1', 2' der Betriebsgeräte 3, 3' mit den Netzspannungsleitungen N, L verbunden. Die Steuervorrichtung 7 erzeugt digitale Steuersignale, die ein vorgegebenes Format besitzen. Jedes digitale Steuersignal besteht aus beispielsweise 16 Bit. Es beginnt mit einem Startbit und endet mit einem Stopbit. Dem Startbit folgen die digital codierte Betriebsadresse des anzusteuernden Betriebsgerätes B, B' bzw. der anzusteuernden Gruppe von Betriebsgeräten und einer oder mehrere digital codierte Steuerbefehle, die den Betriebszustand des Betriebsgerätes bzw. der Betriebsgeräte und der daran angeschlossenen Lampen ändern. Insbesondere werden die Lampen 4, 4' mittels der Steuerbefehle ein- bzw. ausgeschaltet und gedimmt. Die Auswertungsmittel 9, 9' eines jeden Betriebsgerätes B, B' prüfen das an an den Klemmen 8a, 8b, 8a', 8b' der Steuersignaleingänge anliegenden Steuersignal daraufhin, ob ein gültiges digitales Steuersignal vorliegt, das heißt, ob das Steuersignal das vorgegebene Format für digitale Steuersignale besitzt. Zur Erkennung und zum Auswerten digitaler Eingangssignale ist in den Auswertungsmitteln 9, 9' ein erster Schwellwert, der einen minimalen Spannungswert definiert, der noch als Logikpegel "High" oder "1" gewertet wird, und ein zweiter Schwellwert, der einen maximalen Spannungswert definiert, der noch als Logikpegel "Low" oder "0" gewertet wird, gespeichert. Liegt ein gültiges digitales Steuersignal an den Steuersignaleingängen 8a, 8b, 8a', 8b' vor, so verharren die entsprechenden Betriebsgeräte B, B' in der ersten Betriebsart "digitale Ansteuerung" oder wechseln zu dieser Betriebsart. Die Auswertungsmittel 9, 9' der Betriebsgeräte B, B' generieren mit Hilfe eines programmgesteuert arbeitenden Mikrocontrollers den digitalen Steuerbefehlen entsprechende Signale zur Steuerung der Betriebsmittel 3, 3'. Bei jedem Empfang eines Steuersignals an den Steuersignaleingängen 8a, 8b, 8a', 8b' wird die Prüfung, ob das Steuersignal dem vorgegebenen Format für digitale Steuersignale entspricht, erneut durchgeführt. Ergibt die Überprüfung des Steuersignals, daß dieses nicht dem vorgegebenen Format für digitale Steuersignale entspricht, so wird geprüft, ob das an den Steuersignaleingängen 8a, 8b, 8a', 8b' anliegende Steuersignal dem vorgegebenen Format für analoge Steuersignale entspricht. Entspricht das Steuersignal dem vorgegebenen Format für analoge Steuersignale, so wechseln die Betriebsgeräte B, B' in die zweite Betriebsart "analoge Ansteuerung". Der Wechsel zwischen den beiden Betriebsarten "digitale Ansteuerung" und "analoge Ansteuerung" erfolgt somit selbsttätig, das heißt programmgesteuert, durch die Auswertungsmittel 9, 9', des jeweiligen Betriebsgerätes B, B'. Falls weder ein gültiges digitales Steuersignal noch ein gültiges analoges Steuersignal vorliegt, wird das am Steuersignaleingang anliegende Signal ignoriert, das heißt insbesondere, daß die Betriebsgeräte B, B' ihre momentane Betriebsweise beibehalten. Das in Figur 3 abgebildete Flußdiagramm erläutert den Wechsel zwischen den beiden vorgenannten Betriebsarten.

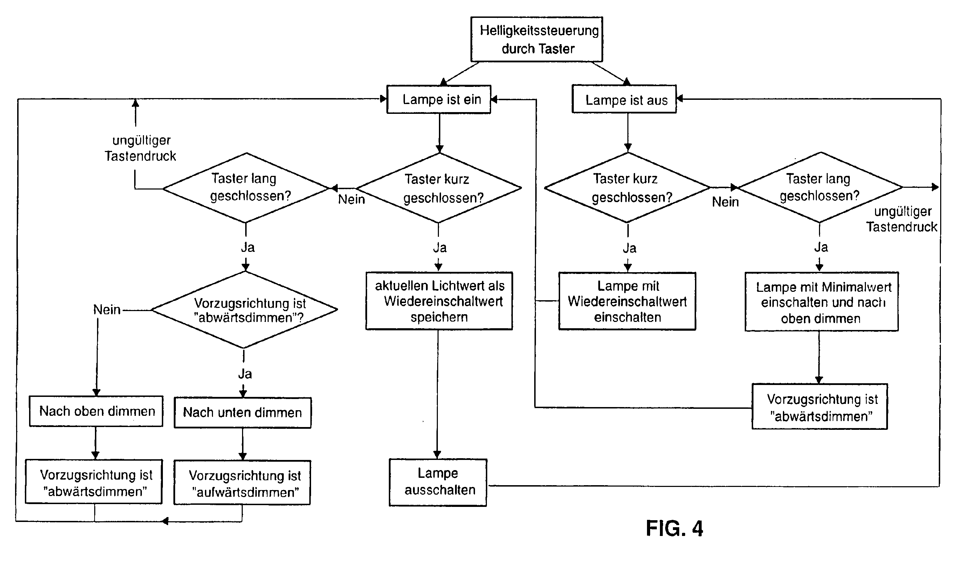

Die Unterscheidung zwischen digitalen und analogen Steuersignalen wird von den Auswertungsmitteln 9, 9' geleistet. Zu diesem Zweck werden die innerhalb eines vorgegebenen Zeitintervalls detektierten Signalflanken des Steuersignals gezählt und die so ermittelte Anzahl von detektierten Signalflanken mit vorgegebenen Sollwerten für die digitale bzw. analoge Ansteuerung verglichen. Da digitale und analoge Steuersignale sehr unterschiedliche Frequenzen aufweisen, ist auf diese Weise eine sichere Unterscheidung der beiden Signalarten gewährleistet. Außerdem kann auf diese Weise auch zwischen gültigen und ungültigen Steuersignalen unterschieden werden. In der Betriebsart "analoge Ansteuerung" generieren die Auswertungsmittel 9, 9' jedes Betriebsgerätes B, B' mit Hilfe ihres programmgesteuert arbeitenden Mikrocontrollers dem analogen Steuersignal entsprechende Signale zur Steuerung der Betriebsmittel 3, 3' des jeweiligen Betriebsgerätes B, B'. In Figur 2 ist die analoge Ansteuerung der Betriebsgeräte B, B' einer Beleuchtungsanlage mit Hilfe eines einzelnen Tasters 13 und einer Konstantlichtregelungseinrichtung schematisch dargestellt. Im folgenden wird die im Flußdiagramm der Figur 4 dargestellte analoge Steuerung der Betriebsgeräte B, B' näher erläutert.

Die Betriebsgeräte B, B' werden wie bereits oben beschrieben, an Netzspannung betrieben. Zu diesem Zweck sind die elektrischen Anschlüsse 1, 2, 1', 2' der Betriebsgeräte B, B' mit den Netzspannungsleitungen N, L verbunden. Die analogen Steuersignale für die Vorrichtung C, C' bzw. für die Betriebsgeräte B, B' werden aus der Netzwechselspannung erzeugt. Zur Erzeugung der analogen Steuersignale ist die Netzspannungsleitung N zusätzlich mit der Klemme 8b, 8b' des Steuersignaleinganges jedes Betriebsgerätes B, B' bzw. jeder Vorrichtung C, C' verbunden, während die andere Netzspannungsleitung L zusätzlich über den Taster 13 mit der anderen Klemme 8a, 8a' des Steuersignaleinganges jedes Betriebsgerätes B, B' bzw. jeder Vorrichtung C, C' verbunden ist. Die analogen Steuersignale werden aus der Netzwechselspannung eventuell nach Spannungsteilung bei Betätigung des Tasters 13 gewonnen. Bei den analogen Steuersignalen handelt es sich daher um periodische Wechselspannungen, die durch Betätigung des Tasters 13 kurzzeitig an den Steuersignaleingang angelegt werden. Die Betätigung des Tasters 13 wird von den Auswertungsmitteln 9, 9' detektiert. Damit die Auswertungsmittel 9, 9' die analogen Steuersignale detektieren und auswerten können, ist ihr Scheitelwert so gewählt, daß er einen ersten Schwellwert, der bei digitalen Steuersignalen den minimalen, noch als Logikpegel "High" oder "1" geltenden Spannungswert definiert, übersteigt. Außerdem sind die analogen Steuersignale so ausgebildet, daß sie zumindest einmal pro Periode einen zweiten Schwellwert, der bei digitalen Signalen den maximalen, noch als Logikpegel "Low" oder "0" geltenden Spannungswert definiert, unterschreiten. So ist gewährleistet, daß die Auswertungsmittel 9, 9' Änderungen am analogen Steuersignal insbesondere das Betätigen des Tasters 13 erkennen. Der genaue Ablauf der Steuerung der Betriebsgeräte B, B' bzw. der Vorrichtungen C, C' mittels analoger Steuersignale ist in dem Flußdiagramm der Figur 4 dargestellt.

Wird bei ausgeschalteten Lampen 4, 4' der Taster 13 kurzzeitig geschlossen, so werden die Lampen 4, 4' mit dem im Betriebsgerät B, B' gespeicherten Wiedereinschaltwert für ihre Dimmstufe bzw. Helligkeitsstufe eingeschaltet. Wird der Taster 13 bei ausgeschalteten Lampen 4, 4' längere Zeit geschlossen, so werden die Lampen 4. 4' mit minimaler Hellgkeit eingeschaltet und ihre Helligkeit solange erhöht, wie der Taster 13 geschlossen ist oder bis die maximale Helligkeit erreicht ist. Bei erneuter Betätigung des Tasters 13 wird die Richtung der Helligkeitsregelung umgekehrt, das heißt, von "Hochregeln" auf "Herunterregeln" der Helligkeit gesetzt. Bei einer ungültigen Betätigung des Tasters 13 verbleiben die Lampen 4, 4' im ausgeschalteten Zustand.

Wird bei eingeschalteten Lampen 4, 4' der Taster 13 kurzzeitig geschlossen, so wird der aktuelle Helligkeitswert der Lampen 4, 4' als Wiedereinschaltwert gespeichert und anschließend werden die Lampen 4, 4' ausgeschaltet. Wird der Taster 13 bei eingeschalteten Lampen 4, 4' längere Zeit geschlossen und steht die Richtung der Helligkeitsregelung auf "Herunterregeln", so wird die Helligkeit der Lampen 4, 4' so lange reduziert, wie der Taster 13 geschlossen bleibt oder bis die Lampen 4, 4' ihre minimale Helligkeitsstufe erreicht haben. Bei erneutem Betätigen des Tasters 13 wird die Richtung der Helligkeitsregelung auf "Hochregeln" gesetzt. Wird der Taster 13 bei eingeschalteten Lampen 4, 4' geschlossen und steht die Richtung der Helligkeitsregelung auf "Hochregeln", so wird die Helligkeit der Lampen 4, 4' so lange erhöht, wie der Taster 13 geschlossen bleibt oder bis die Lampen 4, 4' ihre maximale Helligkeitsstufe erreicht haben. Bei erneuter Betätigung des Tasters 13 wird die Richtung der Helligkeitsregelung auf "Herunterregeln" gesetzt. Im Fall einer ungültigen Betätigung des Tasters 13 verbleiben die Lampen 4, 4' im eingeschalteten Zustand.

Die in Figur 2 schematisch dargestellte Beleuchtungsanlage weist zusätzlich eine mit einem Lichtsensor 12 ausgestattete Konstantlichtregelungseinrichtung auf, die die Helligkeit der Lampen 4, 4' in Abhängigkeit von dem Umgebungslicht steuert, so daß immer ein gleichbleibendes Beleuchtungs- oder Helligkeitsniveau gewährleistet ist. Die Ausgangsschaltung des Sensors 12 der Konstantlichtregelungseinrichtung ist so ausgebildet, daß kein Sensorsignal an den Steuersignaleingängen 8a, 8b, 8a', 8b' der Betriebsgeräte B, B' bzw. der Vorrichtungen C, C' anliegt, solange der Taster 13 geschlossen ist. Nach jeder Änderung des Helligkeitswertes aufgrund einer Betätigung des Tasters 13 wird die Frequenz der Sensorwechselspannung gemessen und als neuer Sollwert von den Betriebsgeräten B, B' zur Helligkeitsregelung der Lampen 4, 4' verwendet. Weicht der Istwert der Frequenz der Sensorwechselspannung vom aktuellen Sollwert ab, so korrigieren die Betriebsgeräte B, B' ihr Helligkeitsniveau so lange, bis der Istwert der Frequenz der Sensorwechselspannung wieder dem Sollwert entspricht. Die Frequenz des von der Konstantlichtregelungseinrichtung erzeugten Sensorsignals an den Steuereingängen 8a, 8b, 8a', 8b' liegt beispielsweise zwischen 200 Hz und 400 Hz. Die Frequenz der Netzwechselspannung und damit auch die Frequenz der vom Taster 13 beeinflußbaren Steuersignale liegt außerhalb des Frequenzbereiches der Sensorwechselspannung.

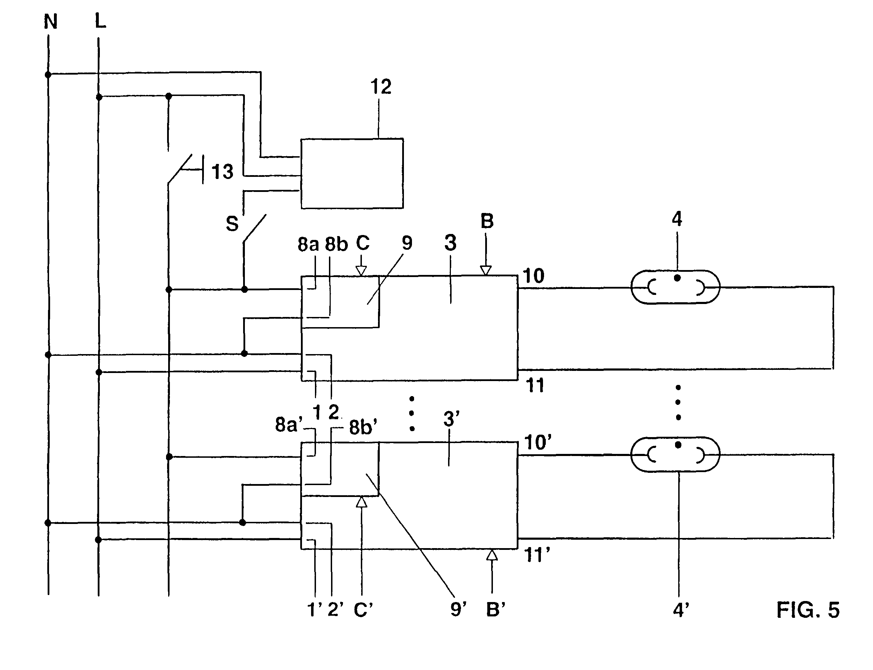

Die Erfindung beschränkt sich nicht auf die oben näher erläuterten Ausführungsbeispiele. In Figur 5 ist ein weiteres Ausführungsbeispiel der Erfindung mit analoger Ansteuerung durch einen Taster 13 dargestellt. Dieses Ausführungsbeispiel ist weitgehend identisch zu dem in Figur 2 abgebildeten Ausführungsbeispiel der Erfindung. Der einzige Unterschied besteht in dem Bauteil 12. In Figur 5 bezeichnet das Bezugszeichen 12 die Kombination aus einem Lichtsensor und einem Präsenzmelder, der die Anwesenheit einer Person im Bereich des Leuchtmittels detektiert und entsprechend ein- oder ausschaltet. Der Präsenzmelder bzw. Lichtsensor ist über den Schalter S aktivierbar und deaktivierbar. Die Konstantlichtregelungseinrichtung arbeitet hier auch, wie bereits oben anhand der Figur 4 beschrieben wurde. Deshalb wird nachstehend nur noch die Funktion des Präsenzmelders näher erläutert.

Der Sensor des Präsenzmelders, der beispielsweise als Bewegungssensor ausgebildet ist, liefert unmittelbar nach Detektion der Anwesenheit einer Person ein Wechselspannungssignal fester Frequenz, wobei die Frequenz dieses Wechselspannungssignals außerhalb der Frequenz der digitalen Ansteuerung bzw. der analogen Tasteransteuerung und außerhalb des Frequenzbereiches des Lichtsensors liegt. Mit der Ausgabe des vorgenannten Wechselspannungssignals wird im Bewegungssensor des Präsenzmelders ein Zeitglied für eine einstellbare Verzögerungsdauer aktiviert. Das Zeitglied wird mit jeder Bewegung auf seinen Ausgangswert zurückgesetzt. Solange die Verzögerungsdauer nicht abgelaufen ist, liefert der Sensor periodisch immer wieder ein Wechselspannungssignal. Zwischen den Wechselspannungssignalen des Präsenzmelders kann der für die Konstantlichtregelung erforderliche Helligkeitswert empfangen werden. Erhält ein Betriebsgerät für eine bestimmte Zeitspanne kein Wechselspannungssignal von dem Präsenzmelder, setzt das Betriebsgerät die Helligkeit auf den geringsten Wert und schaltet schließlich ab.

Eine andere Möglichkeit der Steuerung des Präsenzmelders besteht darin, dass innerhalb der vorgenannten Verzögerungsdauer keine Wechselspannungssignale von den Präsenzmelder übermittelt werden. Sondern stattdessen am Ende der Verzögerungsdauer von dem Präsenzmelder ein Wechselspannungssignal mit geänderter Frequenz geliefert wird, das das Betriebsgerät veranlasst, den niedrigsten Helligkeitswert einzustellen und abzuschalten. Das Tastersignal dominiert in allen Fällen über die Steuersignale des Lichtsensors bzw. Präsenzmelders.

Es sei hier nochmals betont, alle Steuervorrichtungen, ob Taster 13 oder Lichtsensor 12 oder Präsenzmelder oder digitale Steuervorrichtung 7 benutzen denselben Steuersignaleingang 8a, 8b des Betriebsgerätes. Das Betriebsgerät B erkennt selbsttätig, welche Art der Ansteuerung vorliegt und wertet die Steuersignale entsprechend aus. Außerdem meldet sich der Lichtsensor 12 bzw. der Präsenzmelder 12 selbsttätig durch sein Wechselspannungssignal beim Betriebsgerät an. Ein Neustart des Systems zur Erkennung der neu angeschlossenen Steuergeräte ist nicht erforderlich. Der Lichtsensor 12 bzw. Präsenzmelder 12 können sogar mittels des Schalters S temporär abgeschaltet werden. Selbst dann ist ein Neustart des Systems zur Erkennung der angeschlossenen Sensoren nicht nötig.

## Patentansprüche

1. Vorrichtung zur Steuerung von Betriebsmitteln (3, 3') für mindestens ein elektrisches Leuchtmittel (4, 4') mit
- einem Steuersignaleingang (8a, 8b, 8a', 8b') zum Empfang von Steuersignalen von einer externen Steuervorrichtung (7, 12, 13),
- Auswertungsmitteln (9, 9') zur Auswertung der Steuersignale und zur Steuerung der Betriebsmittel (3, 3'),
wobei die Auswertungsmittel (9, 9') geeignet sind, selbsttätig sowohl analoge als auch digitale Steuersignale an dem Steuersignaleingang (8a, 8b, 8a', 8b') zu detektieren und zur Steuerung der Betriebsmittel (3, 3') auszuwerten,
**dadurch gekennzeichnet, dass** die Auswertungsmittel (9, 9') derart ausgebildet sind, dass sie zur Unterscheidung zwischen digitalen und analogen Steuersignalen die Anzahl der innerhalb eines vorgegebenen Zeitintervalls detektierten Signalflanken des Steuersignals mit vorgegebenen Sollwerten für die digitale bzw. analoge Ansteuerung vergleichen

2. Vorrichtung nach Anspruch 1, **dadurch gekennzeichnet, dass** die Auswertungsmittel (9, 9') einen programmgesteuerten Mikrocontroller enthalten.

3. Vorrichtung nach Anspruch 1, **dadurch gekennzeichnet, dass** die Vorrichtung mit einem Betriebsgerät (B, B'), das Betriebsmittel (3, 3') für mindestens ein elektrisches Leuchtmittel (4, 4') aufweist, verbindbar ist.

4. Vorrichtung nach Anspruch 1, **dadurch gekennzeichnet, dass** die externe Steuervorrichtung ein Taster (13) oder eine Lichtsensor (12) oder ein Präsenzmelder (12) oder eine Kombination aus Präsenzmelder und Lichtsensor (12) oder eine digitale Steuervorrichtung (7) ist.

5. Verfahren zur Steuerung von Betriebsmitteln (3, 3') für mindestens ein elektrisches Leuchtmittel (4, 4') durch von einer externen Steuervorrichtung (7, 12, 13) generierte Steuersignale mit Hilfe einer Vorrichtung (C, C'), die einen Steuersignaleingang (8a, 8b, 8a', 8b') zum Empfang der Steuersignale sowie Auswertungsmittel (9, 9') zur Auswertung der Steuersignale und zur Steuerung der Betriebsmittel (3, 3') aufweist, wobei das Verfahren folgende Verfahrensschritte aufweist:
- Beaufschlagen des Steuersignaleinganges (8a, 8b, 8a', 8b') mit einem Steuersignal und Übertragen des Steuersignals an die Auswertungsmittel (9,9'),
- Selbsttätiges Prüfen des Steuersignals durch die Auswertungsmittel (9, 9'), ob das Steuersignal ein gültiges digitales Steuersignal oder ein gültiges analoges Steuersignal oder ein ungültiges Signal bildet,
- Falls ein gültiges digitales oder analoges Steuersignal vorliegt, Auswertung des Steuersignals und entsprechende Steuerung der Betriebsmittel (3, 3') durch die Auswertungsmittel (9, 9'),
**dadurch gekennzeichnet, dass** zur Unterscheidung zwischen digitalen und analogen Steuersignalen die Anzahl der innerhalb eines vorgegebenen Zeitintervalls detektierten Signalflanken des Steuersignals ermittelt und mit vorgegebenen Sollwerten für die digitale bzw. analoge Ansteuerung verglichen wird.

6. Verfahren nach Anspruch 5, **dadurch gekennzeichnet, dass** zur Ansteuerung der mindestens einen Vorrichtung (C, C') mittels analoger Steuersignale an dem Steuersignaleingang (8a, 8b, 8a', 8b') ein Taster (13) verwendet wird.

7. Verfahren nach Anspruch 6, **dadurch gekennzeichnet, dass** als analoges Steuersignal eine periodische Wechselspannung verwendet wird, wobei
- der Scheitelwert der Wechselspannung einen vorgebbaren ersten Schwellwert übersteigt, der für digitale Steuersignale den minimal zulässigen Logikpegel "High" bzw. "1" repräsentiert,
- die Wechselspannung mindestens einmal pro Periode einen Wert unterhalb eines vorgebbaren zweiten Schwellwertes annimmt, der für digitale Steuersignale den maximal zulässigen Logikpegel "Low" bzw. "0" repräsentiert.

8. Verfahren nach Anspruch 5, **dadurch gekennzeichnet, dass** der Steuersignaleingang (8a, 8b, 8a', 8b') mit Steuersignalen von einem Lichtsensor (12) beaufschlagt wird.

9. Verfahren nach Anspruch 5, **dadurch gekennzeichnet, dass** der Steuersignaleingang (8a, 8b, 8a', 8b') mit Steuersignalen von einem Präsenzmelder (12) beaufschlagt wird.

10. Verfahren nach Anspruch 5, **dadurch gekennzeichnet, dass** der Steuersignaleingang (8a, 8b, 8a', 8b') mit Steuersignaleirsvon einem Lichtsensor (12) und einem Präsenzmelder (12) beaufschlagt wird.

## Claims

1. Device for controlling operating means (3, 3') for at least one electric illuminating means (4, 4'), having
- a control signal input (8a, 8b, 8a', 8b') for receiving control signals from an external control device (7, 12, 13),
- evaluating means (9, 9') for evaluating the control signals and for controlling the operating means (3, 3'),
the evaluating means (9, 9') being suitable for automatically detecting both analog and digital control signals at the control signal input (8a, 8b, 8a', 8b'), and for evaluating them for the purpose of controlling the operating means (3, 3'),
**characterized in that** the evaluating means (9, 9') are designed in such a way that in order to distinguish between digital and analogue control signals they compare the number of the signal edges of the control signal detected within a prescribed time interval with prescribed desired values for the digital or analogue drive.

2. Device according to Claim 1, **characterized in that** the evaluating means (9, 9') include a program-controlled microcontroller.

3. Device according to Claim 1, **characterized in that** the device can be connected to an operating device (B, B') that has operating means (3, 3') for at least one electric illuminating means (4, 4').

4. Device according to claim 1, **characterized in that** the external control device is a pushbutton (13) or a light sensor (12) or a presence detector (12) or a combination of presence detector and light sensor (12) or a digital control device (7).

5. Method for controlling operating means (3, 3') for at least one electric illuminating means (4, 4') by means of control signals, generated by an external control device (7, 12, 13), with the aid of a device (C, C') that has a control signal input (8a, 8b, 8a', 8b') for receiving the control signals and evaluating means (9, 9') for evaluating the control signals and for controlling the operating means (3, 3'), the method having the following method steps:
- applying a control signal to the control signal input (8a, 8b, 8a', 8b') and transmitting the control signal to the evaluating means (9, 9'),
- automatically testing the control signal with the aid of the evaluating means (9, 9') as to whether the control signal forms a valid digital control signal or a valid analog control signal or an invalid signal, and
- evaluating the control signal and appropriately controlling the operating means (3, 3') with the aid of the evaluating means (9, 9') if a valid digital or analog control signal is present,
**characterized in that** in order to distinguish between digital and analogue control signals the number of the signal edges of the control signal detected within a prescribed time interval is determined and compared with prescribed desired values for the digital or analogue drive.

6. Method according to Claim 5, **characterized in that** a pushbutton (13) is used to drive the at least one device (C, C') by means of analog control signals at the control signal input (8a, 8b, 8a', 8b').

7. Method according to Claim 6, **characterized in that** a periodic AC voltage is used as analog control signal, in which case
- the peak value of the AC voltage exceeds a prescribable first threshold value that represents the minimum permissible logic level "high" or "1" for digital control signals, and
- the AC voltage assumes at least once per period a value below a prescribable second threshold value that represents the maximum permissible logic level "low" or "0" for digital control signals.

8. Method according to Claim 5, **characterized in that** control signals from a light sensor (12) are applied to the control signal input (8a, 8b, 8a', 8b').

9. Method according to Claim 5, **characterized in that** control signals from a presence detector (12) are applied to the control signal input (8a, 8b, 8a', 8b').

10. Method according to Claim 5, **characterized in that** control signals from a light sensor (12) and a presence detector (12) are applied to the control signal input (8a, 8b, 8a', 8b').

## Revendications

1. Dispositif pour commander des moyens d'exploitation (3, 3') pour au moins un moyen d'éclairage électrique (4, 4'), avec
- une entrée de signal de commande (8a, 8b, 8a', 8b') pour la réception de signaux de commande d'un dispositif de commande externe (7, 12, 13),
- des moyens d'évaluation (9, 9') pour l'évaluation des signaux de commande et pour la commande des moyens d'exploitation (3, 3'),
les moyens d'évaluation (9, 9') étant faits pour détecter automatiquement aussi bien des signaux de commande analogiques que des signaux de commande numériques à l'entrée de signal de commande (8a, 8b, 8a', 8b') et pour les évaluer en vue de la commande des moyens d'exploitation (3, 3'),
**caractérisé par le fait que** les moyens d'évaluation (9, 9') sont conçus de telle sorte que, pour distinguer entre signaux de commande numériques et signaux de commande analogiques, ils comparent le nombre des fronts du signal de commande qui sont détectés pendant un intervalle de temps prescrit à des valeurs de consigne prescrites pour la commande numérique et pour la commande analogique.

2. Dispositif selon la revendication 1, **caractérisé par le fait que** les moyens d'évaluation (9, 9') contiennent un microcontrôleur commandé par programme.

3. Dispositif selon la revendication 1, **caractérisé par le fait que** le dispositif peut être relié à un appareil d'exploitation (B, B') qui comporte des moyens d'exploitation (3, 3') pour au moins un moyen d'éclairage électrique (4, 4').

4. Dispositif selon la revendication 1, **caractérisé par le fait que** le dispositif de commande externe est un bouton-poussoir (13) ou un capteur de lumière (12) ou un détecteur de présence (12) ou une combinaison de détecteur de présence et de capteur de lumière (12) ou un dispositif de commande numérique (7).

5. Procédé pour commander des moyens d'exploitation (3, 3') pour au moins un moyen d'éclairage électrique (4, 4') par des signaux de commande produits par un dispositif de commande externe (7, 12, 13) à l'aide d'un dispositif (C, C') qui comporte une entrée de signal de commande (8a, 8b, 8a', 8b') pour la réception des signaux de commande ainsi que des moyens d'évaluation (9, 9') pour l'évaluation des signaux de commande et pour la commande des moyens d'exploitation (3, 3'), le procédé comprenant les étapes suivantes :
- alimentation de l'entrée de signal de commande (8a, 8b, 8a', 8b') avec un signal de commande et transmission du signal de commande aux moyens d'évaluation (9, 9'),
- vérification automatique du signal de commande par les moyens d'évaluation (9, 9') pour savoir si le signal de commande est un signal de commande numérique valide, un signal de commande analogique valide ou un signal invalide,
- si le signal de commande est un signal de commande numérique valide ou un signal de commande analogique valide, évaluation du signal de commande et commande correspondante des moyens d'exploitation (3, 3') par les moyens d'évaluation (9, 9'),
**caractérisé par le fait que**, pour distinguer entre signaux de commande numériques et signaux de commande analogiques, on détermine le nombre des fronts du signal de commande qui sont détectés pendant un intervalle de temps prescrit et on le compare à des valeurs de consigne prescrites pour la commande numérique et pour la commande analogique.

6. Procédé selon la revendication 5, **caractérisé par le fait que**, pour la commande du ou des dispositifs (C, C') au moyen de signaux de commande analogiques à l'entrée de signal de commande (8a, 8b, 8a', 8b'), on utilise un bouton-poussoir (13) .

7. Procédé selon la revendication 6, **caractérisé par le fait que** l'on utilise comme signal de commande analogique une tension alternative périodique,
- la valeur de crête de la tension alternative dépassant une première valeur de seuil qui peut être prescrite et qui représente pour des signaux de commande numériques le niveau logique minimal autorisé "high" ou "1",
- la tension alternative prenant au moins une fois par période une valeur inférieure à une deuxième valeur de seuil qui peut être prescrite et qui représente pour des signaux de commande numériques le niveau logique maximal autorisé "low" ou "0".

8. Procédé selon la revendication 5, **caractérisé par le fait que** l'entrée de signal de commande (8a, 8b, 8a', 8b') est alimentée en signaux de commande par un capteur de lumière (12).

9. Procédé selon la revendication 5, **caractérisé par le fait que** l'entrée de signal de commande (8a, 8b, 8a', 8b') est alimentée en signaux de commande par un détecteur de présence (12).

10. Procédé selon la revendication 5, **caractérisé par le fait que** l'entrée de signal de commande (8a, 8b, 8a', 8b') est alimentée en signaux de commande par un capteur de lumière (12) et par un détecteur de présence (12).
